Europäisches Patentamt

(19) European Patent Office

Office européen des brevets

(11) Publication number: **0 138 249**
**A1**

(12) # EUROPEAN PATENT APPLICATION

(21) Application number: **84201261.9**

(22) Date of filing: **31.08.84**

(51) Int. Cl.⁴: **A 47 J 37/12**

(30) Priority: **01.09.83 BE 2060194**

(43) Date of publication of application: **24.04.85**
**Bulletin 85/17**

(84) Designated Contracting States: **CH DE FR GB IT LI NL**

(71) Applicant: **ITT INDUSTRIES BELGIUM, Société Anonyme, Chaussée de Neerstalle 56-70, B-1190 Bruxelles (US)**

(84) Designated Contracting States: **NL**

(71) Applicant: **ITT INDUSTRIES INC., 320 Park Avenue, New York, NY 10022 (US)**

(84) Designated Contracting States: **CH DE FR GB IT LI**

(72) Inventor: **Colley, Jacques Louis Joseph, rue Naniot 274, B-4000 Liege (BE)**

(74) Representative: **Rosenoer, Jacques et al, BELL TELEPHONE MANUFACTURING COMPANY Naamloze Vennootschap Patent Department Francis Wellesplein 1, B-2018 Antwerp (BE)**

(54) **Cooking appliance with lid.**

(57)    A domestic deep fryer has a circular hole (16) in the vat (1) in which a lens (17) is fixed by a wire spring (19). This enables the inside of the vat to be illuminated by a lamp (10) positioned inside the handle (5) of plastic material mounted on the sheet metal shell (11) surrounding the vat. The metal lid (3) is integral with an upper lid (4) in plastic material which is removably hinged (6) on top of the side handle. The lid includes a window through which the illuminated inside of the vat may be observed.

- 1-

## COOKING APPLIANCE WITH LID

The invention relates to a cooking appliance with lid comprising a window as well as means to illuminate the inside of the appliance.

Such a device is to be found in the US patent 1 836 827 concerning a cooker comprising a window enabling to observe a cooking operation. It is arranged next to trunnions enabling the rotation of the appliance and in which is mounted a lamp socket whose bulb projects inside the appliance and is protected by a generally cylindrical translucent cap following the shape of the lamp whose axis is parallel to the horizontal rotation axis of the appliance.

A general object of the invention is to provide a device of this type but adapted to a deep fryer and particularly a domestic deep fryer of the type described in Belgian patent 870 419 whose lid mounted on the vat with the help of a hinge and able to be easily withdrawn for cleaning operations, comprises a double wall window occupying most of the surface of the lid apart from an odour filter also mounted in the latter.

In accordance with a first characteristic of the invention, the said means enabling to illuminate the inside of the appliance are mounted outside the cooking vessel and light is projected inside the latter through a transparent part of the vessel.

In this manner, and with the help of other characteristics of the invention defined in the claims, it is possible to improve the visibility of cooking operations inside a domestic deep fryer of the type described in the above mentioned Belgian patent and without hindering the raising or the lowering of the basket inside the vat. It is possible to mount a miniature electric lamp with a filament operating on the mains voltage in a vertical position and outside the cylindrical metallic shell surrounding the deep fryer vat. The lamp socket can be mounted on a bracket fixed on the outside of this shell which comprises a circular opening slightly below the upper rim of the vat and aligned on a corresponding hole in the latter and in which a lens is mounted by means ensuring resiliency with respect to thermal constraints as well as a fluid-tight mounting. Particularly by mounting this lighting device substantially opposite the observation window arranged in the lid, one ensures an appropriate lighting and a better visibility of the cooking operations.

The invention also relates to a cooking appliance with a lid caught in a part integral with the vessel through a hinge constituted by a rod able to freely pivot at its two ends mounted in the lid and whose central bow-shaped part is offset with respect to the pivot axis in such a way that when the parts of the rod in the pivot axis are each inserted in a slot integral with the vessel, the rod thus acting as hinge will be squeezed in a stable position.

Such a hinge is also found in the above mentioned Belgian patent and it enables not only to close and to open the lid but also to readily withdraw the latter, particularly for cleaning operations. As shown in this patent, the central part of the bent rod can be pivoted down-wardly with a certain pressure in order to be squeezed inside the angle formed between the outside rim of the vat and an outside pillar integral with the latter, the two straight ends of the rod bearing on the bottom of two slots in the pillar and their ends being able to freely pivot in circular lodgings foreseen inside the lid in order to enable its rotation.

To completely withdraw the lid, it suffices to exert a pressure in the opposite direction, e.g. with the help of a spoon serving as lever , in order to cause the central part of the rod to jump above the vat rim. A pillar in plastic material as the upper lid, in which the ends of the rod acting as hinge are lodged serves also to house electrical control components for the deep fryer and constitutes also one of the handles enabling to displace the vat. Hence, not only due to tolerances in the manufacture of the piece-parts but also in connection with the mounting of the pillar on the vat, one must take care that the sum of these various tolerances does not entail variations for the distance between the bottom of the slots  and the outside rim of the vat which would be so large that a secure latching of the hinge rod would no longer be ensured.

Consequently, another object of the invention is to ensure a construction of this type modified so as to facilitate a way of manufacturing  more easily ensuring a firm fixing of the hinge.

In accordance with a characteristic of the invention, said part integral with the vessel comprises an abutment which, along the direction of the axis of the said rod, is located between the two  slots and against which said bow-shaped part can come to press so as to fix said hinge into position.

In this way, the rod acting as hinge is squeezed between an abutment and slots which are all three part of the same element, this enabling a correct mounting of the hinge with less severe tolerances.

In accordance with a preferred embodiment of the invention, a domestic deep fryer comprises a lid with a plastic material part which can be caught above a handle also in plastic material and integral with the housing and the vat of the deep fryer. This handle comprises a recess covering a bracket mounted on the housing and bearing a lamp and its socket. Circular holes are provided at the level of

- 4 -

the lamp both in the  housing and in the vat in order to enable the mounting  of a lens in this last opening to diffuse the light under the lid provided with a double wall  window. The handle comprises two slots  on each side of an abutment in order to permit fixing a crank-shaped pivot rod and serving as hinge for the lid which can readily be completely detached from the vessel.

The above and other objects and characteristics of the invention and the best way to attain them will be better understood from the following description of a detailed embodiment of the invention to be read in conjunction with the accompanying drawings and which represent :

Fig. 1, a partially cut away view of the deep fryer, including the lamp, the lens and the lid;

Fig. 2, a perspective view of part of the vat and of part of the open lid, including the hinge and the opening for  lighting the vat;

Fig. 3, a perspective view of the assembly of the lens on the vat with the help of a spring;

Fig. 4, a perspective view of the handle enabling mounting of the hinge; and

Fig. 5, a perspective view of a metallic reflector for the lamp and mounted inside the handle.

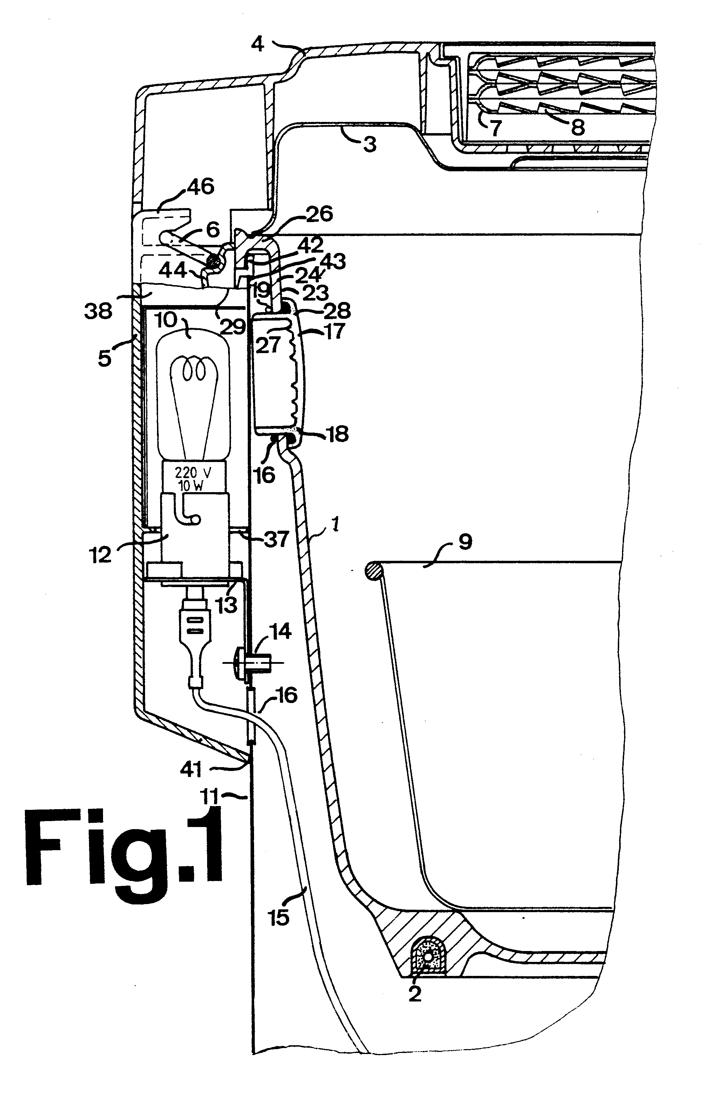

Referring to Fig. 1, the latter shows part of the vat 1 of a domestic deep fryer which may be cast in aluminium and comprising an electric heating element 2 set in the circular bottom of the vat.  The latter is topped by a metallic lid 3 itself bearing an upper lid 4 in plastic material which is mounted on the vat and more particularly on its handle 5 also in plastic material, with the help of a hinge essentially constituted by a rod 6 bent as a crank-shaft, the arrangement being such that the lid 3/4 can easily be completely removed so as to be cleaned for instance.

Indeed, it comprises a housing for an odour filter which as shown, is constituted by the superposition

- 5 -

of four metal grids such as 7 mounted in paired opposition
so that the vents such as 8 in these grids form a maze
for the fumes thus escaping out of the vat during a cooking
operation.

The various elements indicated above as well
as the basket 9 able to go up and down inside the vat with the
lid closed, are analogous to those described in the above
mentioned Belgian patent which however described an active
charcoal filter cartridge instead of the metallic elements
7 which are the subject of Belgian patent 879 268. In these
prior devices, the surface of the lid which is not occupied
by the odour filter bears a double wall window (not shown in
the present patent) enabling to observe the cooking operations
with the lid closed.

So as to ensure a better vision and this
independently of the position of the deep fryer and of the
ambient light, Fig. 1 indicates that a lamp 10 is housed in
an internal recess of handle 5, outside the cylindrical sheet
metal shell 11 and surrounding vat 1. The bayonet socket 12
for the lamp is mounted on an L-shaped bracket 13 whose vertical
part is fixed on the shell 11 by screw 14, the feeding wires
15 for the socket passing through another opening 16 provided
in the shell.

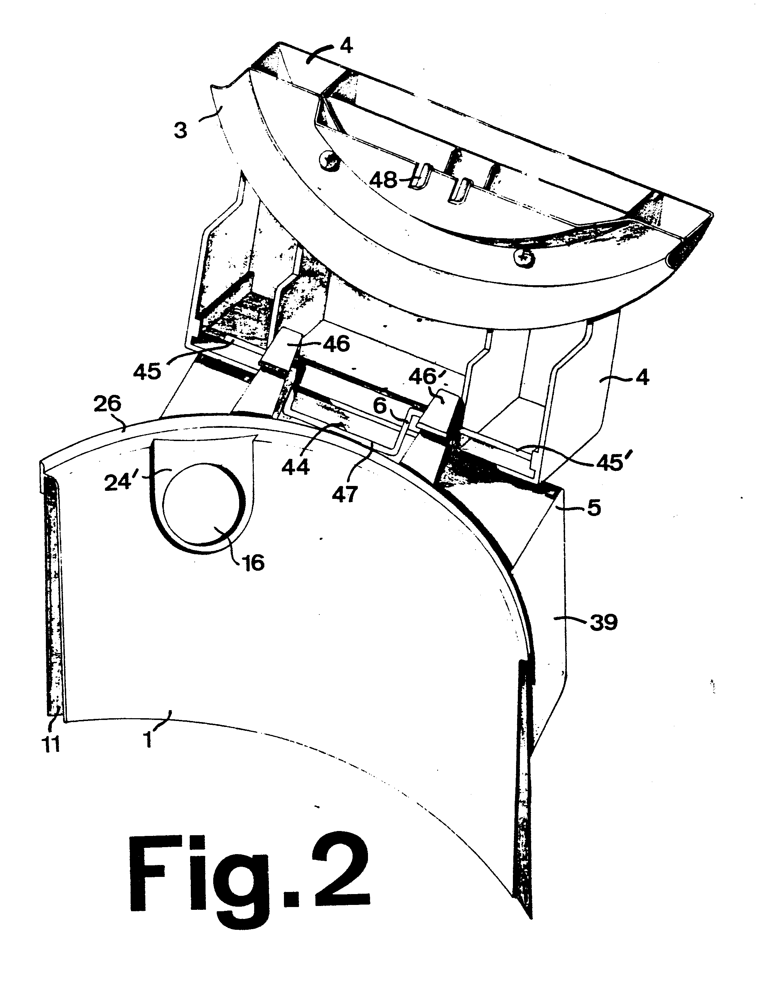

A circular opening is also foreseen in the shell
at the level of the bulb of lamp 10 and in front of an
analogous opening 16 in the aluminium vat 1. The arrangement
of this opening 16 inside vat 1 is shown in Fig. 2 while

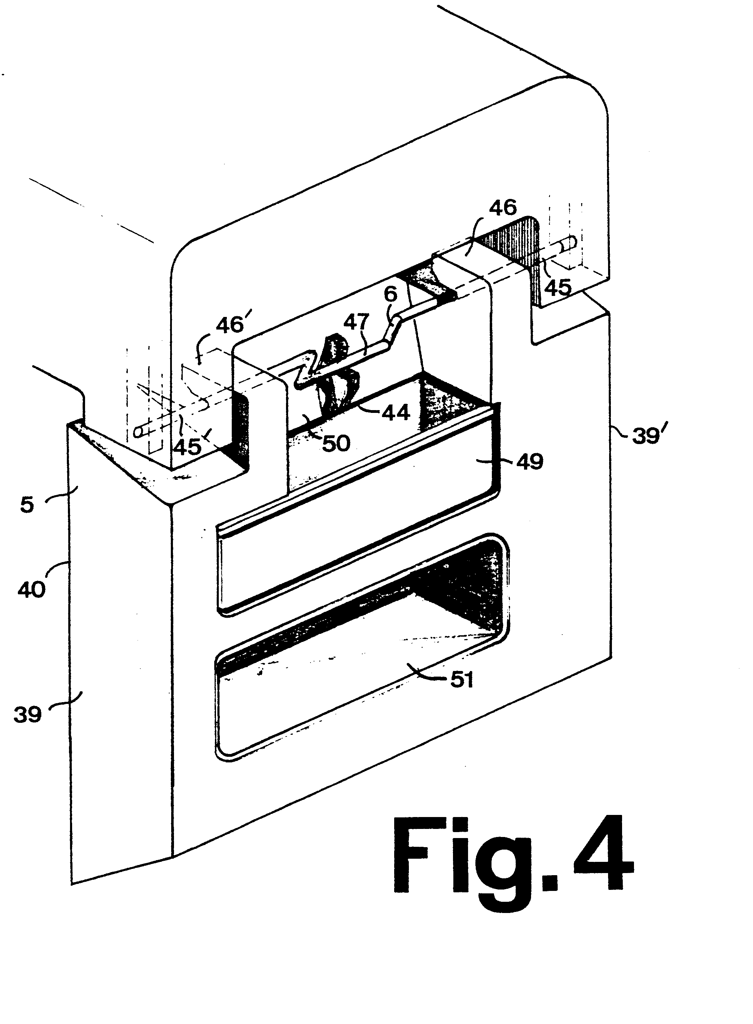

Fig. 3 shows this opening on the outside of the vat when
it is closed by lens 17. The latter  is a transparent element
having the form of a hollow cylindrical cap whose circular
surface 18 is larger than that of the opening 16 so as to
be able to mount it on the inside of vat 1, securing lens
17 towards the inside of the vat being ensured by the wire
spring 19 as particularly shown by Fig. 3.

Two opposite flat bottom slots 19 and 19' are cut away in the outside cylindrical part of lens 17 so that the straight parts such as 21 of U-shaped bent spring 19 can be pressed therein by natural resiliency forcing the two branches of the U to come nearer one another. On the other hand, these branches are also arched as shown, with respect to the straight central part 23, in such a manner that these also pull the lens 17 towards the outside of the vat, the central part 23 of the U and the bent ends 22/22' of the spring bearing on the vat respectively below and above lens 17.

Circular opening 16 is obtained in the aluminium vat during moulding and both on the internal and on the external side, flat parts 24' and 24 respectively are foreseen around the hole, the second being slightly raised with respect to the external wall of the vat as shown by Fig. 3, contrary to recess 24' (Fig. 2). In this manner, one ensures a perfectly plane shoulder on which the rim 17 of the lens comes to abut while outside the vat, spring 19 is also bearing on a plane surface, the overall arrangement ensuring positioning of lens 17 in the opening 16. Spring 19 cooperates not only to this arrangement but also ensures independence of the fixing means with regard to thermal constraints which are particularly severe in the case of a deep fryer. So as to avoid any position upset of ns 17, during moulding of vat 1 one provides ridges 25 and 25' which will block the bent ends 22 and 22' of spring 19 so that the latter cannot turn around the axis of lens 17 and particularly due to the increased thickness 24 restricted around opening 16, entail inadequate fixing of the lens.

The latter is mounted substantially on top of vat 1, just underneath the upper rim 26 of the latter. This offers the advantage of good lighting because the light from lamp 10 is diffused with the help of concentric ridges such as 27 provided in the internal surface of cap 18, the aluminium vat and eventually the metallic underlid being equally capable of acting as reflector so as to facilitate observation through the window (not shown) which, as in Belgian patent 870 419, is located on the other side of handle 5 serving to mount hinge 6, i.e. on the side of the other external pillar (not shown) of the deep fryer and bearing the control knob and the pivotable elongated handle (not shown) serving to manipulate basket 9. For the user, the lamp is thus essentially hidden not only by the lens but also by that part of the lid bearing filter 7.

On the other hand, positioning of lens 17 near the edge of vat 1 normally permits to avoid contact with boiling oil, the maximum filling level being located below the lens. However, mounting safety for the lens is ensured by a toroidal joint 28 squeezed between cap 18 of the lens and the vat 1. This joint will preferably be in silicone rubber, e.g. that sold under the mark VITON (Du Pont). The material for the lens is preferably a polyethersulphone such as that sold under the mark VICTREX (ICI) and more particularly model 200P suitable for injection moulding and enabling good operation including a good visibility at such high temperatures as 180° centigrade.

Other assemblies for the lens 17 are possible, e.g. with the help of a setting in a slot, generally similar to that provided in the upper rim of the vat but on the side opposite to the hinge, to house a part enabling pivoting of the elongated handle of basket 9 as described in Belgian patent 870 419. But that described in detail is particularly efficient to withstand use constraints which are particularly severe in the case of a deep fryer.

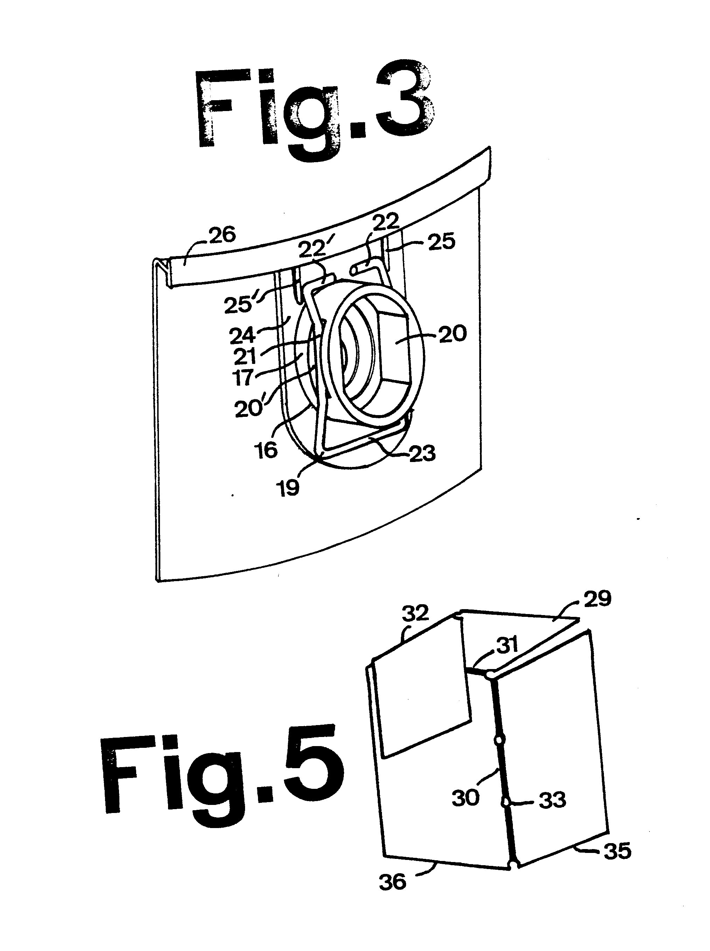

The vertical position of lamp 10 also ensures a suitable life for its filament and an appropriate withdrawal of the heat is obtained towards the outside through the wall of handle 5 in plastic material. This is obtained despite the presence of a reflector 29 which covers part of the recess of handle 5 surrounding lamp 10. As can be seen on Fig. 5 representing a perspective view of reflector 29, the latter is constituted by a sheet of metal bent along three mutually perpendicular lines 30, 31 and 32 so as to create a four wall reflector surrounding lamp 10 except towards the bottom and, of course, in the direction of shell 11. Bending is facilitated by the use of regularly spaced holes such as 34 and once the three dimensional shape is obtained, the reflector can be slipped inside handle 5 where it will be maintained due to its own resiliency, contact with the inside of handle 5 being on the other hand minimal. Indeed, the lower edges 35 and 36 of the reflector merely bear on a horizontal U-shaped ridge 37 provided during moulding of handle 5 and surrounding the lamp socket 12. On the upper side, the horizontal part of reflector 29 resiliently bears against two parallel fins such as 38 appearing in Fig. 1 and located in the vertical plane. Similar parallel fins (not shown) but located this time in horizontal planes are mounted on a vertical internal wall (not shown) of handle 5, permitting also positioning of the lateral wall of reflector 29 terminated by lower edge 35 with minimal contact and again under the action of the own resiliency of this wall. Finally, the opposite lateral wall terminated by the upper edge 32 establishes a resilient contact of the same nature with the lateral wall 39' (Fig.4) of handle 5 because it extends only on the upper part of the reflector corresponding to the bulb of lamp 10 and following a slight concave arching of the lateral edges such as 40 of handle 5, contrary to a slight convex arching (not shown) of horizontal curved in edges such as 41 (Fig. 1) applied on a sector of the periphery of shell 11. This reduced surface for the lateral wall of the reflector terminated by upper edge 32 offers the advantage of fully completing the reflection action towards the inside of vat 1 while enabling heat dissipation towards the outside through wall 39' of the handle.

As shown in Fig. 1, fixing of the latter has been simplified by the use of raised lugs such as 42 and foreseen on the curved upper edge of the handle corresponding to the lower edge 41. Three lugs of this type are arranged along this upper circular edge and pass through rectangular openings such as 43 provided in shell 11 above the circular hole enabling lighting by lamp 10 and just below the upper rim 26 of vat 1. This rim extends up and down, this last part thus enabling the lugs such as 42 to be housed inside shell 11 and behind the vertical lower part of rim 26 of the vat 1. Accordingly, fixing of handle 5 being thus ensured at its upper part and its four edges such as 41 following the cylindrical shape of shell 11, it suffices to ensure fixing by a single central screw (not shown) above the lower circular edge 41.

Central lug such as 42 is however interrupted by an abutment 44 also obtained during moulding of handle 5 and which presents a recess in which can be housed the central part of hinge 6 constituted as in Belgian patent 870 419 by a crank-shaft like rod whose shape is particularly visible in Figs. 2 and 4. As in this earlier patent, ends 45 and 45' of this bent rod 6 can freely rotate in holes foreseen inside the upper lid 4 in plastic material. As in the earlier arrangement, slots are provided in the upper part of handle 5, in the present case in shoulders 46 and 46'. As previously, it is thus possible to put lid 3/4 in position by insertion in a slanted position above the horizontal in order to insert the straight parts of rod 6 inside the slots foreseen in shoulders 46 and 46'. The central bow-shaped part 47 can then be pivoted downwardly below the horizontal to force its insertion in the hollow of the central abutment 44.

As in the above mentioned Belgian patents, and more particularly No 879 268, condensates which are produced particularly when lid 3/4 is opened as shown in Fig. 2, can run down, particularly through the vents such as 48 provided in the lower horizontal wall of metal lid 3 to fall in the small basin 49 which, as in the last mentioned patent, is housed in handle 5 and more particularly in a recess below abutment 44, the latter being located in the middle of a surface 50 slightly slanted with respect to the vertical so as to enable liquids to run down into basin 49 underneath which is a second recess constituting one of the handles to move the vat, this avoiding the protrusions used in the above mentioned Belgian patents.

While the principles of the invention have been described above in connection with specific apparatus, it is to be clearly understood that this description is made only by way of example and not as a limitation on the scope of the invention.

- 11 -

CLAIMS

1) Cooking appliance with lid (3,4) comprising a window as well as means (10) to illuminate the inside of the appliance, characterized in that they are mounted outside the cooking vessel (1) and that light is projected inside the latter through a transparent part (17) of the vessel.

2) Cooking appliance with lid (3,4) as in 1, characterized in that said transparent part (17) is a distinct element fixed in an aperture (16) in the wall of the vessel (1).

3) Cooking appliance with lid (3,4) as in 2, characterized in that said aperture (16) is provided below the upper rim of the vessel (1).

4) Cooking appliance with lid (3,4) as in 3, characterized in that said transparent element (17) is fixed in the aperture (16) by resilient means (19) enabling in particular to withstand thermal constraints.

5) Cooking appliance with lid (3,4) as in 4, characterized in that said transparent element (17) comprises a part inserted through the aperture (16) of the vessel (1) and integral with another part (18) blocked against the internal wall of the vessel    under the action of a generally U-shaped wire spring (19) arranged on the outside of the vessel wall, the two branches (21) of the U being arched in such a way that they are on the one hand maintained at the bottom of slots (20/20') respectively foreseen in the part projecting outside the vessel and on the other  end so that they pull on said part thereby

- 12 -

closing   the aperture under the action of the spring.

6) Cooking appliance with lid (3,4) as in 5, characterized in that blocking ridges (25/25') are foreseen in the external wall of the vessel so as to prevent a displacement of the two ends (22/22') of the spring.

7) Cooking appliance with lid (3,4) as in 2, characterized in that said transparent element (17) is constituted by a lens bearing on a flat part (24') of the internal wall of the vessel (1) and foreseen with a hollow cylindrical part traversing said aperture (16), the ends (22/22') of the branches of said spring (19) as well as its central part (23) bearing on a flat part (24) of the external wall of the vessel.

8)   Cooking appliance with lid (3,4) as in 1, characterized in that said means enabling to illuminate the inside of the appliance are constituted by a lamp (10) mounted vertically with the help of a socket (12) fixed outside the vessel (1), the lamp and its socket being covered by a part (5) able to serve as handle and acting as housing.

9) Cooking appliance with lid (3,4) as in 8, characterized in that said part (5) acting as housing contains a reflector (29) for   said lamp (10).

lo) Cooking appliance with lid (3,4) as in 9, characterized in that said reflector (29) is constituted by a sheet of metal comprising four parts which are bent along a succession of three mutually perpendicular edges (30, 31 and 32) to define a rectangular recess surrounding the bulb of the lamp (10).

11) Cooking  appliance with lid (3,4) as in 10, characterized in that said reflector (29) is fixed in said part (5) acting as housing under its own resiliency, the housing being provided with fins (38) so as to limit the contact surface between the reflector and the housing.

12) Cooking appliance with lid as in 10,

- 13 -

characterized in that the sidewall of the reflector (29)
surrounding the lamp (10) is located on the side of an
external wall of said housing (5) and extends only at the level of
the filament of the bulb of the lamp so as to facilitate
heat evacuation inside the housing.

13) Cooking appliance with lid (3,4) as in 7,
characterized in that the said lens (17) is obtained by
moulding of polyethersulphone having the properties of
VICTREX (trademark).

14) Cooking appliance with lid (3,4) as in 8,
characterized in that said handle is constituted by an
outside recess (51).

15) Cooking appliance with lid (3,4) as in 8,
characterized in that said part (5) acting as housing is
provided on its upper edge with lugs (42)engaging through
corresponding apertures (43) provided in a shell (11)
surrounding said vessel (1) and are squeezed under a vertical
rim (26) of the latter in order to partially ensure fixing
of said part on the appliance.

16) Cooking appliance with lid (4) which can
be caught in a part (5) integral with the vessel (1) with the
help of a hinge constituted by a rod (6) able to freely
pivot at its two ends (45/45') mounted in the lid and whose
central bow-shaped part (47) is offset from the axis of the
pivot in such a way that when those parts of the rod in the
axis of the pivot are each inserted in a slot (46/46')
integral with the vessel, the rod thus acting as hinge is
squeezed in a stable position, characterized in that said
part integral with the vessel comprises an abutment (44)
which, in the direction of the axis of said rod, is located
between the two slots and against which said bow-shaped
part can come to abut so as to fix said hinge into position.

Antwerp, June 19, 1984
JR/SM

0138249

# Fig.1

# Fig.2

Fig.4

Fig.3

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 281 608 (VINCENT) <br> * page 3, left-hand column, lines 7-49; figures 2,3 * | 1,2 | A 47 J 37/12 |
| A | | 8,9 | |
| | --- | | |
| X | US-A-2 341 648 (PARR) <br> * en entier * | 1,2 | |
| | --- | | |
| D,A | US-A-1 836 627 (THAU) | | |
| | ----- | | |

**TECHNICAL FIELDS SEARCHED (Int. Cl.4)**

A 47 J
F 24 C

The present search report has been drawn up for all claims

| Place of search <br> THE HAGUE | Date of completion of the search <br> 03-12-1984 | Examiner <br> SCHARTZ J. |
|---|---|---|

EPO Form 1503 03.82